# EUROPEAN PATENT APPLICATION

(11) **EP 4 538 129 A1**
(43) Date of publication of application: **16.04.2025**
(21) Application number: 23203270.6
(22) Date of filing: 12.10.2023
(51) Int. Cl.: B60T 13/68, B60T 13/38, B60T 15/04

(54) **BISTABLE RELAY VALVE**

(71) Applicant: KNORR-BREMSE Systeme für Nutzfahrzeuge GmbH, 80809 München (DE)
(72) Inventor: ZEMAN, Ferenc, 1114 Budapest (HU)

(57) **Abstract**

The invention relates to a bistable relay valve for an electropneumatic brake control device (1), comprising a relay piston (46) which can assume a first end position, a second end position and a plurality of intermediate positions between the first end position and the second end position, a control chamber (42) which is bounded by the relay piston (46) a pneumatic control input (20), which is always connected to the control chamber (42), for inputting control pressure from a control pressure generator (8) into the control chamber (20) for actuating the relay piston (46), an output port (28) for outputting a working pressure at least one supply port (16), for controlling a supply pressure, an exhaust port (56), a double-seat valve comprising an inlet valve (74) and an outlet valve (78) and actuated by the relay piston (46) and a working chamber (58) connected to the outlet port (28), a supply chamber (60) connected to the at least one supply port (16), wherein in the first end position of the relay piston (46) the working chamber (58) is brought into communication with the exhaust port (56), and in the second end position the working chamber (58) is brought into communication with the supply chamber (60), wherein, when the relay piston (46) has reached the first end position, a first flow connection is established in which the control chamber (42) is connected to the exhaust port (56), and when the relay piston (46) has reached the second end position, a second flow connection is established in which the at least one supply port (16) is connected to the control chamber (42). This stabilizes the end positions of the relay valve (18).

## Description

The invention relates to a bistable relay valve for a electropneumatic brake control device, according to the preamble of claim 1, as well as an electropneumatic brake control device with at least one such bistable relay valve according to claim 9, as well as a brake device of a vehicle with such an electropneumatic brake control device according to claim 14.

In commercial vehicles, including tractor-trailer combinations, electropneumatic parking brake systems are equipped with spring brake cylinders which, in the release position, pressurize a spring compression chamber with compressed air and thus keep the spring tensioned, while for braking the spring compression chamber is vented, i.e. connected to atmospheric pressure, so that the brake cylinder generates a braking force under the action of the spring.

Electro-pneumatic parking brake devices are known, with a pneumatic relay valve controlled by an electro-mechanical, bistable solenoid valve. Both valve positions for "parking brake application" and "parking brake release" must be stable, i.e. remain in the selected end position without the influence of a person or electrical energy, which is particularly desirable in the event of a failure of the electrical energy. In the prior art, bistability is therefore ensured by bistable solenoid valves with a downstream relay valve, as described in DE 10 2006 055 570 B4. However, bistable solenoid valves are expensive and prone to failure in practice.

It is known from EP 3 678 909 B1 that bistability in an electropneumatic parking brake device with a relay valve is achieved by a feedback line from the relay valve output to the control chamber of the relay valve, with a choke being arranged in the feedback path. In this way, a bistable behavior of the relay valve is achieved, which stably maintains the currently assumed position such as "park" or "drive" even without power supply to the solenoid valve device controlling the relay valve. However, such a feedback line requires a certain amount of construction work and installation space, which is limited especially when relay valves are used in pressure control modules of braking devices.

In contrast, the invention is based on the object of providing a bistable relay valve which is inexpensive and requires little installation space. Furthermore, an electropneumatic brake control device with such a bistable relay valve as well as a brake device of a vehicle with such an electropneumatic brake control device shall be presented.

This task is solved according to the invention by the features of claims 1, 9 and 14.

### Disclosure of the invention

The invention is based on a bistable relay valve for an electropneumatic brake control device, having
a) a relay valve housing,
b) a relay piston which is guided inside the relay valve housing and can assume a first end position, a second end position and several intermediate positions between the first end position and the second end position,
c) a control chamber, which is delimited by the relay piston,
d) a pneumatic control input, always connected to the control chamber, for feeding control pressure from a in particular external control pressure generator into the control chamber for actuating the relay piston,
e) an output port for controlling a working pressure,
f) at least one supply port, which is designed and set up to control a supply pressure of at least one compressed air supply there,
g) an exhaust port or vent that is always in communication with the atmosphere,
h) a double-seat valve, which comprises an inlet valve and an outlet valve and is actuated by the relay piston, and with
i) a working chamber connected to the output port, in particular always,
j) a supply chamber which is in particular always connected to the at least one supply port, wherein
   k1) in the first end position of the relay piston in particular the inlet valve is closed, the outlet valve is opened and the working chamber is brought into communication or is in communication with the vent, and
   k2) in the second end position of the relay piston, in particular the outlet valve is closed, the inlet valve is opened and the working chamber is brought into communication or is in communication with the supply chamber, wherein
l) when the relay piston has reached the first end position, a first flow connection is established, in which the control chamber is connected to the exhaust port or vent, the first flow connection being disconnected at least in the second end position of the relay piston.

"The flow connection is disconnected" means that the flow connection once established or in principle possible then does not (no longer) exist or has been interrupted or has not been established.

In particular, several intermediate positions of the relay piston exist in order to be able to generate different requested parking brake forces in the electropneumatic brake device, in particular in an electropneumatic parking brake device, for example in the context of emergency or auxiliary braking.

Furthermore, the first end position of the relay piston is in particular a venting position, in which the outlet valve of the double-seat valve controlled by the relay piston is opened and the output port of the bistable relay valve is connected to the vent or exhaust port. The second first end position of the relay piston is in particular a venting position, in which the inlet valve of the double-seat valve controlled by the relay piston is opened and the output port of the bistable relay valve is connected to the at least one supply port.

According to the invention it is then provided that
m) when the relay piston has reached the second end position, a second flow connection is established, in which the at least one supply port is connected to the control chamber, wherein
n) the second flow connection is disconnected at least in the first end position.

In particular, several supply connections can be provided in the bistable relay valve, with, for example, a first supply connection and a second supply connection. In this case, the first supply connection can (always) be connected to the supply chamber and the second supply connection can be connected to the control chamber when the relay piston has reached the second end position in accordance with feature m) above. Also, the first supply port may be designed and arranged to be connected to a first compressed air supply or, in a braking device with the bistable relay valve, to be connected to the first compressed air supply. Furthermore, the second supply port can be designed and configured to be connected to the first compressed air supply or to a second compressed air supply or, in a braking device with the bistable relay valve, to the first compressed air supply or to the second compressed air supply.

Due to the embodiment according to the invention, at least the second end position of the relay piston can be maintained stable by the action of supply pressure fed into the control chamber via the at least one supply port, even if the control pressure can no longer be generated in the control chamber, for example, due to a power failure by the control pressure generator.

Accordingly, the present invention has found a way that can be implemented with little effort and installation space, in particular in the event of a power failure during the execution of a function of an electropneumatic brake device, for example an electropneumatic parking brake device, such as "releasing the parking brake", "applying the parking brake", in a stable manner. For the person skilled in the art, it is easily possible to adapt the first flow connection and/or the second flow connection, in particular with regard to the flow cross sections, in such a way that this effect is achieved.

The two additional flow connections with the control chamber therefore only occur in certain operating modes.

The first flow connection is a vent connection that is automatically established with the control chamber when the relay piston is in the first (upper) end position, so that the control chamber can (also) be depressurized as a result.

The second flow connection is a ventilation connection, which is automatically established with the control chamber, which is connected to the control volume when the relay piston is in the second (lower) end position, so that the pressure in the control chamber is (also) thereby higher than the ambient pressure and in particular equal to the supply pressure in the compressed air supply.

Preferably, the air volume flow provided via the pneumatic control input of the bistable relay valve should be greater than the air volume flow provided by the first flow connection and/or by the second flow connection. This can ensure that the control request via pneumatic control input of the bistable relay valve takes precedence over control by the first and second flow connection.

The function of the bistable relay valve according to the invention is therefore similar to that of a conventional relay valve. Like the latter, it responds to a control pressure at the pneumatic control input with a higher air flow rate at the output port. In addition, at least the two end positions of the relay valve piston, namely the first end position (control chamber vented) and the second end position (control chamber vented) are stabilized.

Another advantage is that with the bistable relay valve according to the invention, control/regulation of the control pressure in the control chamber can be terminated after the first end position (control chamber vented) and/or the second end position (control chamber vented) has been reached. Compensation for natural or accidental leakage is not required. The first and second flow connection established in the respective end position of the relay piston stabilizes the end position assumed in each case.

While the first flow connection is effective, influences that can lead to an unintended pressure increase in the control chamber are compensated by the first flow connection. Therefore, as long as the first flow connection is effective, the bistable relay valve tends to reduce the pressure in the control chamber down to atmospheric pressure.

While the second flow connection is effective, natural or accidental leakages which may cause an unintended pressure drop in the control chamber are compensated by the second flow connection. As long as the second flow connection is active, the bistable relay valve tends to increase the pressure in the control chamber, especially up to the supply pressure of the connected compressed air supply.

Advantageous further embodiments and improvements of the invention disclosed in claim 1 are possible by the measures set forth in the subclaims.

According to a particularly preferred embodiment, in at least one particular intermediate position of the plurality of intermediate positions of the relay piston, the inlet valve and the outlet valve may be closed, wherein in the at least one particular intermediate position
a) the first flow connection is established and the second flow connection is disconnected, or
b) the second flow connection is established and the first flow connection is disconnected, or
c) both the first flow connection and the second flow connection are separated.

As a result, with (initially) prevailing (intermediate) pressures in the control chamber between the supply pressure and the atmospheric pressure, there is a tendency to vent the control chamber in variant a), a tendency to vent the control chamber in variant b), and no change in the pressure in the control chamber in variant c). By means of these measure(s), in the intermediate position of the relay piston, the pressure in the control chamber can be adjusted according to a desired tendency - lowering the pressure, increasing the pressure or keeping the pressure constant.

Particularly preferably, the relay piston can delimit the control chamber on the one hand and the working chamber on the other. According to a further development, the relay piston can have a first active surface and a second active surface facing away from the first active surface, the first active surface facing the control chamber and being larger than the second active surface, which faces the working chamber. This helps to keep the relay piston in a stable position, because the pressures acting on the relay piston in the control chamber and in the working chamber cause opposing forces to act on it.

The relay piston can also be biased into the first end position by first spring means. The first end position of the relay piston is in particular a venting position in which the outlet valve of the double-seat valve controlled by the relay piston is opened and the output port of the bistable relay valve is connected to the vent or exhaust port, which is conducive to a stable assumption of the "parking brake applied" state in an electropneumatic parking brake device, for example.

Also, the relay piston and the relay valve housing can form components of a spool valve, which is designed and arranged to establish and/or disconnect the first flow connection and the second flow connection depending on the position of the relay piston.

According to a further illustrative measure, the relay piston may be at least
a) have a first passage opening which, on the one hand, is always in communication with the control chamber and which, in the first end position, comes in connection with an internal vent duct connected to the exhaust port, and/or
b) a second passage opening, which on the one hand communicates with the control chamber and which in the second end position can come in connection with a supply channel connected to the at least one supply port.

The at least one first and/or second passage opening can extend in a wall of the relay piston in relation to an axial direction of movement of the relay piston within the relay valve housing, in particular radially and/or axially.

Further, in the first end position, the first passage opening can overlap with an orifice of an internal vent duct connected to the exhaust port.

Further, in the second end position, the second passage opening can overlap with an orifice of a supply channel connected to the at least one supply port.

Alternatively or additionally, the internal vent duct and/or the supply channel can comprise a radial ring chamber between a circumferential surface of the relay piston and an opposite housing wall of the relay valve housing. This radial ring chamber can be axially bounded by at least one annular seal accommodated on the relay piston or on the housing wall of the relay valve housing.

Also, with the bistable relay valve
a) the inlet valve of the double-seat valve comprises an inlet seat formed on the relay valve housing and a sleeve cooperating with the inlet seat and guided in the relay valve housing, the sleeve being biased against the inlet seat by second spring means, and
b) the outlet valve of the double-seat valve has an outlet seat formed on the sleeve and a valve body of the relay piston cooperating with it.

The invention also relates to an electropneumatic brake control device , which is characterized in that it comprises at least one bistable relay valve described above, the control pressure generator and at least one brake cylinder, the pneumatic control input being connected to the control pressure generator and the at least one brake cylinder being connected directly or indirectly to the working port.

The electropneumatic brake control device, can, for example.
a) a parking brake control device form n, wherein the working pressure is a parking brake pressure and the at least one brake cylinder is a spring brake cylinder, or
b) a service brake control device, wherein the working pressure is a service brake pressure and the at least one brake cylinder is a service brake cylinder, or
c) a trailer brake control device, wherein the working pressure is a trailer brake pressure.

Also, in the electropneumatic brake control device, the control pressure generator may include an inlet/outlet solenoid valve combination controlled by an electronic controller to generate the control pressure.

Particularly preferably, the electropneumatic brake control device is designed as a brake control module, i.e. as a structural unit with its own single- or multi-part module housing in which at least the following is integrated:
a) at least one integrated bistable relay valve described above,
b) the electronic control, and
c) the inlet/outlet solenoid valve combination.

This results in a compact unit that can be further expanded as a basic brake module.

In particular, the integrated electronic control of the brake control module can be connected to an electrical signal connection of the brake control module for an electrical signal generator, via which brake signals can be input into the electronic control.

The signal connection can also be used to control signals from which the electronic control system then generates the brake signals itself. These signals can, for example, be present on a vehicle data bus that is connected to the signal connection. Such signals may in particular be signals which allow a standstill of the vehicle to be detected as part of a driver assistance system such as a starting assistance system, whereby then, for example, when the vehicle standstill is detected on the basis of these signals, which are then vehicle standstill signals, the electronic control system generates a parking brake signal for applying the parking brake. Alternatively, the signals from which the electronic control of the brake module then generates parking brake signals can originate from any other driver assistance systems such as an ACC (Adaptive Cruise Control) system in the event that the parking brake device is used as an auxiliary brake while driving. In all these cases, therefore, the parking brake signals are generated automatically by one or more driver assistance systems rather than being dependent on actuation of the parking brake signal generator.

Of course, the signals input into the brake control module, from which the electronic control system then generates brake signals, can originate from an actuating device that can be manually operated by the driver of the vehicle, with which, for example, in the case of an electropneumatic parking brake device, at least the "parking brake applied" and "parking brake released" "driving" states are produced as a function of a degree of actuation of an actuating element and, in particular, the level of the parking brake force exerted is also determined as part of an emergency or auxiliary brake function.

For this purpose, this signal connection is then designed, for example, so that it can be connected to a vehicle data bus in order to feed signals routed via the vehicle data bus into the electronic control system, which then generates brake signals there depending on these signals. Communication between the electronic control system and the vehicle data bus can preferably be bidirectional.

Particularly preferably, the inlet/outlet solenoid valve combination can be formed by two 2/2-way solenoid valves, each with a blocking position and an open position, a first 2/2-way solenoid valve being connected as an inlet solenoid valve between the control input of the relay valve and the supply port and a second 2/2-way solenoid valve being connected as an outlet solenoid valve between the control input of the relay valve and a pressure sink or vent.

In this case, the first 2/2-way solenoid valve and the second 2/2-way solenoid valve can each have a de-energized, spring-loaded blocking position and a energized conducting position. Then, in the event of a failure of the electrical power supply, the control input of the relay valve is disconnected both from the supply port and from the vent or pressure sink, so that no control compressed air can reach the relay valve from the supply port or escape from it via the pressure sink.

Alternatively, the inlet/outlet solenoid valve combination may include at least one 3/2 solenoid valve.

Overall, this results in advantages in terms of simple and cost-effective design, low installation space requirements, and robust, proven technology, as the use of modular components such as 2/2 solenoid valves and/or 3/2 solenoid valves is preferred.

When a parking brake signal representing a "parking brake actuated with a specific brake pressure value" is input or generated in the electronic control system, the latter preferably controls the first 2/2-way solenoid valve and/or the second 2/2-way solenoid valve in the locked position or in the let-through position depending on the respective brake pressure value. This is particularly the case in auxiliary or emergency braking, in which the parking brake must replace or support the service brake.

For example, to increase the pressure in at least one spring brake cylinder connected to the output port of the bistable relay valve, the first 2/2-way solenoid valve is controlled to the let-through position so that the pressure at the control input of the bistable relay valve and thus also in the at least one spring brake cylinder is increased.

To reduce the pressure in the at least one spring brake cylinder, for example, the second 2/2-way solenoid valve is switched to the let-through position so that the pressure at the control input of the relay valve and thus also in the at least one spring brake cylinder is reduced.

In the first case, the electronic control system can control the first 2/2-way solenoid valve and, in the second case, the second 2/2-way solenoid valve alternately or pulsedly in the closed position and, in contrast, over a longer period of time in the open position, in order to achieve a ramped or gradual pressure increase or pressure drop, which is particularly advantageous for sensitive metering or for controlling the parking brake force or the parking brake pressure, especially in the context of auxiliary or emergency braking.

According to a further development, when a parking brake signal representing a "parking brake applied" state is input or generated in the electronic controller or in the electronic controller, the latter can control the first 2/2-way solenoid valve to the closed position and the second 2/2-way solenoid valve first to the open position and then to the closed position. For example, by energizing, the second 2/2-way solenoid valve is therefore first switched to the open position for a certain period of time, while the first 2/2-way solenoid valve remains in the closed position. After the specified period of time has elapsed, which is necessary for the pressure at the port for the at least one spring brake cylinder to have dropped at least sufficiently for the bistable relay valve to remain in the vent position even after the second 2/2-way solenoid valve has been switched off, the second 2/2-way solenoid valve is then controlled to the block position.

Particularly preferably, the electropneumatic brake control module can be provided for an electropneumatic brake device of a tractor-trailer combination and then has at least one port for a trailer control valve or trailer control module.

Furthermore, at least one pressure sensor can be connected to the output port of the bistable relay valve and/or at least one pressure sensor can be connected to the control input of the bistable relay valve and/or at least one pressure sensor can be connected to the port for the trailer control valve or the trailer control module, which inputs a signal representing an actual pressure into the electronic control of the brake module.

The electronic control system can then be designed to perform a setpoint/actual comparison in the context of pressure control on the basis of a signal representing an actual pressure and a signal representing a value for a setpoint pressure, and/or to perform a pressure plausibility check and/or to determine the supply pressure present at the supply port.

If, for example, a pressure sensor is connected to the output port of the bistable relay valve and can thus also be connected to the port for the at least one spring brake cylinder or to the port for the trailer control valve, the actual pressure and the operating state of the at least one spring brake cylinder (released, applied or partially released or applied) can be determined there. The same then also applies to the operating state of the trailer brakes, which can be determined from the actual pressure at the port for the trailer control valve. Furthermore, a pressure control circuit is implemented in which the inlet/outlet solenoid valve combination in conjunction with the bistable relay valve form the actuators.

If, according to one embodiment, a pressure sensor is connected to the control input of the bistable relay valve, the actual pressure controlled by the inlet/outlet solenoid valve combination, in particular the actual pressure controlled by the first and second 2/2-way solenoid valves, can be determined very quickly, which enables the pressure control loop to be highly dynamic. In addition, the operating state of the at least one spring brake cylinder (released, applied or partially released or applied) as well as the actual brake pressure prevailing there can also be determined approximately, taking into account the transmission behavior of the bistable relay valve. The same then applies to the operating state of the trailer brakes.

If, according to a further embodiment, a first pressure sensor is connected to the control input of the bistable relay valve and a second pressure sensor is connected to the output terminal of the bistable relay valve, this enables fault detection by means of a plausibility check. For example, the actual pressure values of the first and second pressure sensors must be in a certain relation to each other, taking into account certain tolerances, depending on the operating state. In this case, error detection or error monitoring can be carried out quickly, completely and in several operating states. Furthermore, a faster pressure control is possible than if only one pressure sensor is arranged at the output port of the bistable relay valve or one pressure sensor is arranged at the control input of the bistable relay valve.

If, together with a pressure sensor at the output port and/or at the control input of the bistable relay valve, a further pressure sensor is connected to the port of the trailer control valve, direct measurement of the supply pressure at the supply port is possible in several operating states without having to set the operating state "Driving" or "Parking brake release". Furthermore, rapid fault detection is also possible by means of plausibility checks. For example, the actual pressures of the pressure sensors must indicate equal values when the solenoid valves are switched so that a pressure connection is established between the pressure sensors. As before, it is also possible to determine the supply pressure in several operating states. Advantageously, this also makes it possible to control the pressure at the port for the trailer control valve when the "stretch brake" state is provided, in which only the trailer brakes, but not the tractor brakes, are applied in a metered manner to stretch the tractor-trailer combination.

The invention also relates to a braking device of a vehicle, which is characterized in that it comprises an electropneumatic brake control device described above and the at least one compressed air supply, wherein the at least one supply port is connected to the at least one compressed air supply.

As already mentioned above, the first supply port of the bistable relay valve can be connected to the first compressed air supply in the braking device. Furthermore, the second supply port of the bistable relay valve can be connected to the first compressed air supply or to the second compressed air supply.

Also, the electropneumatic braking device can include
a) a parking brake device, and/or
b) a service braking device, and/or
c) a trailer braking device.

Further embodiments improving the invention are described in more detail below together with a description of an embodiment of the invention with reference to the drawing.

### Drawing

In the drawing shows
- Fig.1: a schematic cross-sectional view of a preferred embodiment of a bistable relay valve according to the invention;
- Fig. 2A: the bistable relay valve of Fig. 1 with a relay piston in a first end position;
- Fig. 2B: the bistable relay valve of Fig. 1 with the relay piston in an intermediate position;
- Fig. 2C: the bistable relay valve of Fig. 1 with the relay piston in a second end position.
- Fig. 3: another embodiment of a bistable relay valve according to the invention with the relay piston in an intermediate position;
- Fig. 4: another embodiment of a bistable relay valve according to the invention with the relay piston in an intermediate position;
- Fig. 5: a further embodiment of a bistable relay valve according to the invention with the relay piston in an intermediate position;
- Fig. 6: a schematic circuit diagram of a preferred embodiment of an electropneumatic parking brake device according to the invention.

### Description of the embodiments

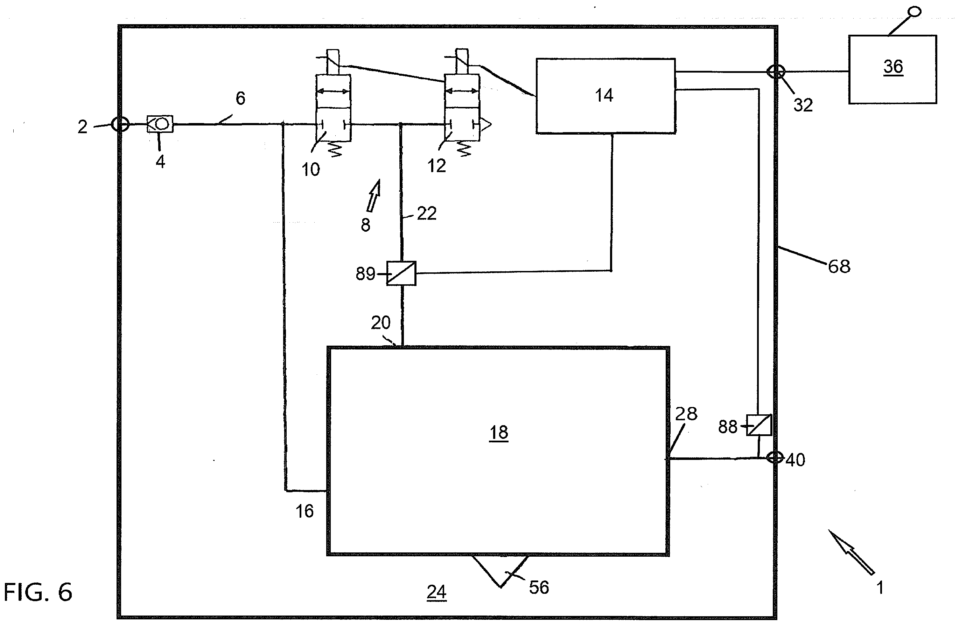

**Fig. 6** shows a schematic circuit diagram of a preferred embodiment of an electropneumatic brake control device 1, which is designed here, for example, as a parking brake control device. The electropneumatic brake control device 1 therefore preferably represents a control device of an electropneumatic parking brake device of a tractor-trailer combination not shown here and is arranged on the tractor vehicle.

The electropneumatic brake control device 1 has a device supply port 2 which is protected by a check valve 4. From the device supply port 2, a supply line 6 extends on the one hand to a first solenoid valve device with a first 2/2-way solenoid valve 10 as an inlet solenoid valve and a second 2/2-way solenoid valve 12 as an outlet solenoid valve, that is an inlet/outlet solenoid valve combination 8. The first 2/2-way solenoid valve 10, like the second 2/2-way solenoid valve 12, is in the closed position shown when de-energized, while both valves 10, 12 switch to the open position when energized and are controlled by an electronic controller 14.

Furthermore, a supply port 16 of a bistable relay valve 18, which will be considered in detail later, is also connected to the device supply port 2 via supply line 6. A pneumatic control input 20 of the relay valve 18 is connected via a control line 22 to the inlet/outlet solenoid valve combination 8 consisting of first (inlet) solenoid valve 10 (here, for example: first 2/2-way solenoid valve) and the second (outlet) solenoid valve 12 (here, for example: second 2/2-way solenoid valve).

Specifically, in the de-energized blocking position of the second 2/2-way solenoid valve 12, the connection between the control line 22 or the control input 20 of the relay valve 18 and an exhaust port 56 communicating with the atmosphere 24 is interrupted, while this connection is switched in the energized conducting position. Similarly, in the de-energized closed position of the first 2/2-way solenoid valve 10, the connection between the control line 22 or the control input 20 of the relay valve 18 and the device supply port 2 is interrupted while this connection is switched in the energized let-through position. The bistable relay valve 18 further comprises a output port 28.

The two 2/2-way solenoid valves 10, 12 are preferably spring-loaded into their de-energized position and are switched over by energizing them by means of the electronic controller 14.

The output port 28 of the relay valve 18 is connected to a port 40 for at least one spring brake cylinder. Preferably, two spring brake cylinders not shown here are connected to this port 40 at the rear axle of the tractor vehicle.

The control line 22 or the control input 20 of the relay valve 18 is pressurized or vented depending on the switching position of the first 2/2-way solenoid valve 10 and the second 2/2-way solenoid valve 12 (inlet/outlet solenoid valve combination 8), so that pressurization or venting by means of air volume boosting by means of the relay valve 18 results in a corresponding pressurization or venting of the output port 28 and thus of the port 40 for the at least one spring brake cylinder.

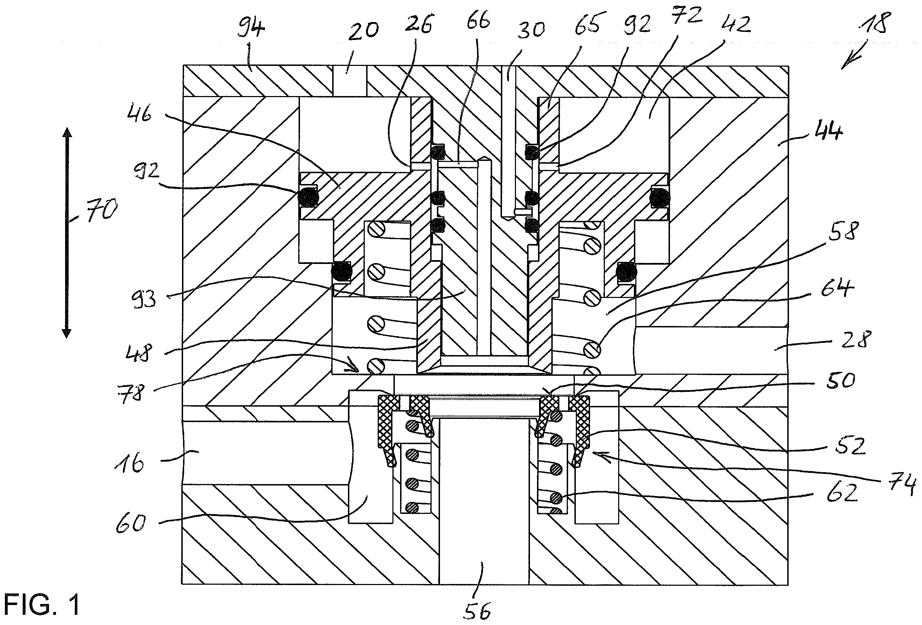

The bistable relay valve 18 shown in **Fig. 1** **in** a preferred embodiment is partially constructed in a known manner and includes a control chamber 42 connected to the control line via the control input 20, a relay piston 46 bounding the control chamber 42 and guided in a relay valve housing 44 in the axial direction of movement 70 with a valve body 48 formed on the relay piston 46 or on its formed on the relay valve piston rod thereof, which forms an outlet valve 78 of a double-seat valve with an outlet seat 50 on a sleeve 52 also movably received in the housing 44. Further, the relay valve 18 includes an inlet seat 54 formed on the housing 44, against which the sleeve 52 is biased and together with which it forms an inlet valve 74 of the double-seat valve. The sleeve 52 also has a central through hole which, when the relay piston 46 is lifted from the sleeve 52, connects the exhaust port 56 to a working chamber 58 which is connected to the outlet port 28 to vent the latter. On the other hand, with the inlet seat 54 raised, a supply chamber 60 communicating with the supply port 16 is connected to the working chamber 58 to vent the outlet port 28. Accordingly, the position of the relay piston 46, which can push the cuff 52 downward with its valve body 48 to lift it off the inlet seat 54, is determined firstly by the pressure at the control inlet 20 or in the control chamber 42. Finally, the cuff 52 is urged against the inlet seat 54 by means of a cuff spring 62. In addition, a relay piston spring 64 uses the spring force to push the relay piston 46 away from the outlet seat 50 in the direction of the control chamber 42.

The relay valve housing 44 here comprises a valve block 95 and cover 94 with a cylindrical protrusion 93, where the relay piston 46 is axially guided on with a radial inner circumferential surface of its central bore. Further, the relay piston 46 is also guided axially on a radial inner circumferential surface of a central bore of the valve block 95. Annular seals 92 are arranged in between, respectively.

The relay piston 46 has a first effective surface 80 and a second active surface 82 facing away from the first effective surface 80, wherein the first effective surface 80 faces the control chamber 42 and is larger than the second effective surface 82, which faces the working chamber 58.

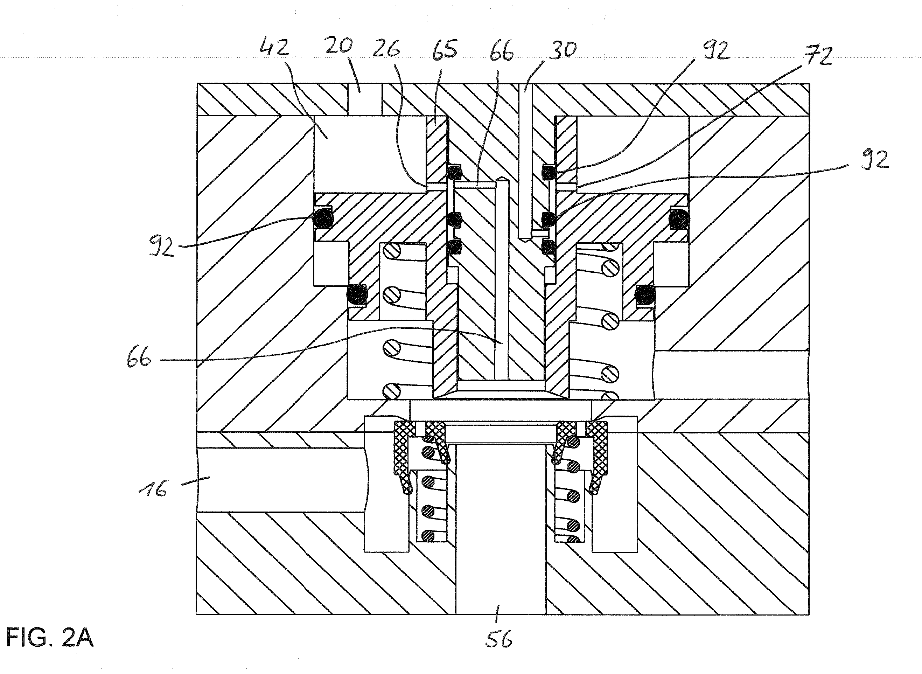

Furthermore, the relay piston 46 here has, for example, a first, preferably radial, through-opening 26 in its axially extending relay piston wall 65, which on the one hand is always in communication with the control chamber 42 and which in an (upper) first end position of the relay piston 46 shown in **Fig. 2A** overlaps with an orifice of an internal vent channel 66 connected to the exhaust port 56. In this first end position of the relay piston 46, therefore, a first flow connection is established between the control chamber 42 and the exhaust port 56.

The first end position of the relay piston 46 represents a maximum position of the relay piston 46, which is upper here, as well as a venting position of the bistable relay valve 18, in which the output port 28 is vented in order to pressurize the at least one spring brake cylinder. For this purpose, the control chamber 42 is vented, in particular to atmospheric pressure.

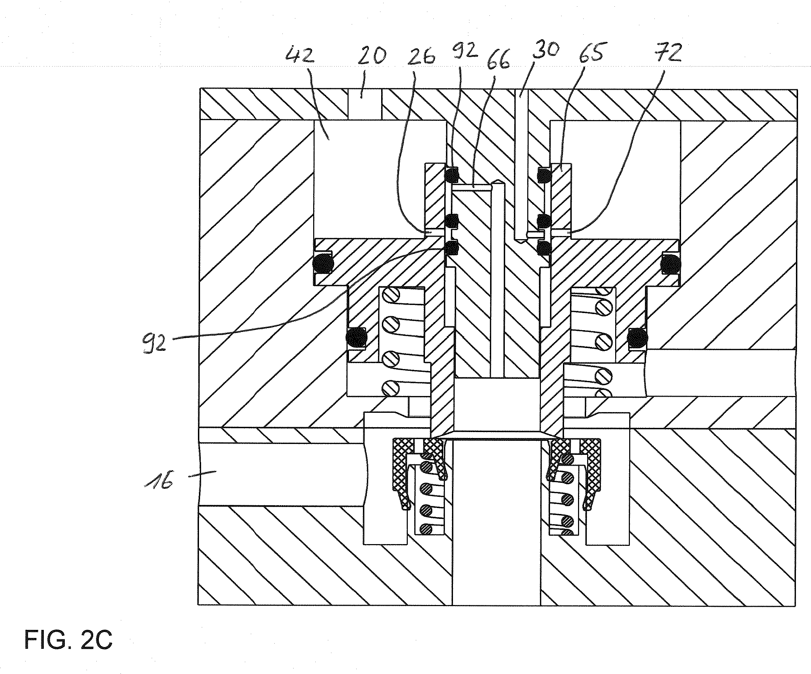

In addition, the relay piston 46 here has, for example, a second, preferably radial through-opening 72 in the piston wall 65, which, on the one hand, is always in communication with the control chamber 42 and which, in a (lower) second end position of the relay piston 46 shown in **Fig. 2C****,** overlaps with an orifice of an internal supply channel 30 which is connected to the supply port 16. In this second end position of the relay piston 46, therefore, a second flow connection is established between the control chamber 42 and the supply port 16, which in turn is connected to the compressed air supply via the device supply port 2.

The second end position of the relay piston 46 represents a lower maximum position of the relay piston 46 here as well as a venting position of the bistable relay valve 18, in which the output port 28 is vented to release the at least one spring brake cylinder. For this purpose, the control chamber 42 is vented, in particular up to the supply pressure in the compressed air supply.

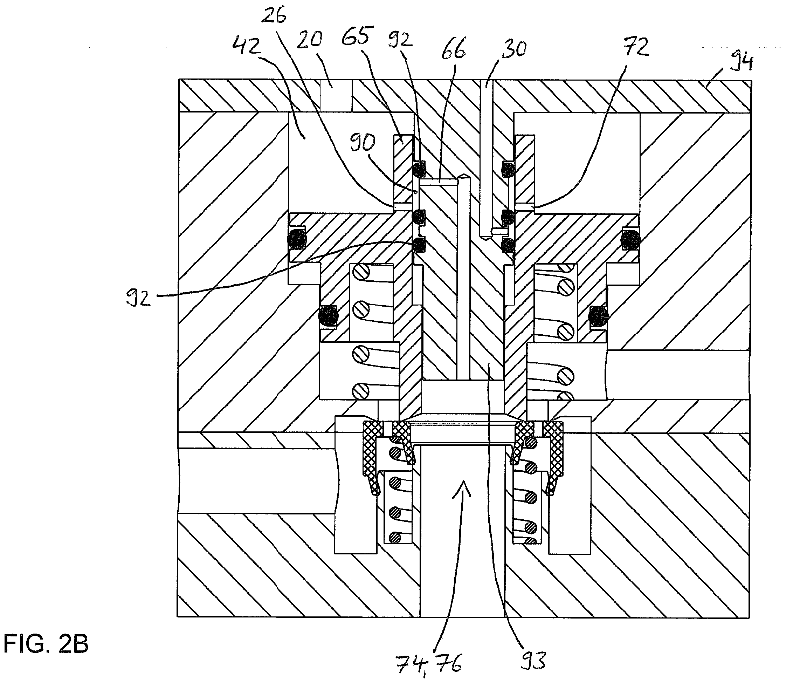

**Fig. 2B** shows an intermediate position of the relay piston 46, which lies between the first end position of **Fig. 2A** and the second end position of Fig. **2C****.** This intermediate position of the relay piston 46 is characterized by the fact that in it both the inlet valve 74 and the outlet valve 78 of the double-seat valve are closed. In such an intermediate position, the control chamber is (initially) loaded with a pressure between the supply pressure and the atmospheric pressure.

In the embodiment according to **Figs. 2A-2C****,** the two through openings 26, 72 of the relay piston 46 and the orifices of the supply channel 30 and the vent channel 66 cooperating therewith are designed and arranged in such a way that in the intermediate position shown in **Fig. 2B****,** the orifice of the internal vent duct 66 comes in contact with the first passage opening 26 by a radial ring chamber 90 between a radial inner circumferential surface of the relay piston wall 65 and the opposite radial outer circumferential wall of the cylindrical protrusion 93 of the cover 94 of the relay valve housing 44. This radial ring chamber 90 is here for example axially limited by two annular seals 92 accommodated on or in the cylindrical protrusion 93 of the cover 94 of the relay valve housing 44.

Further, in the intermediate position shown in **Fig. 2B****,** the orifice of the supply channel 30 is not aligned with the second passage opening 72. As a result, the first flow connection between the control chamber 42 and the exhaust port 56 is established, but not the second flow connection, so that the control chamber 42 is vented. As a result, when the pressures in the control chamber 42 are (initially) between the reservoir pressure and the atmospheric pressure, there is a tendency for the control chamber 42 to vent.

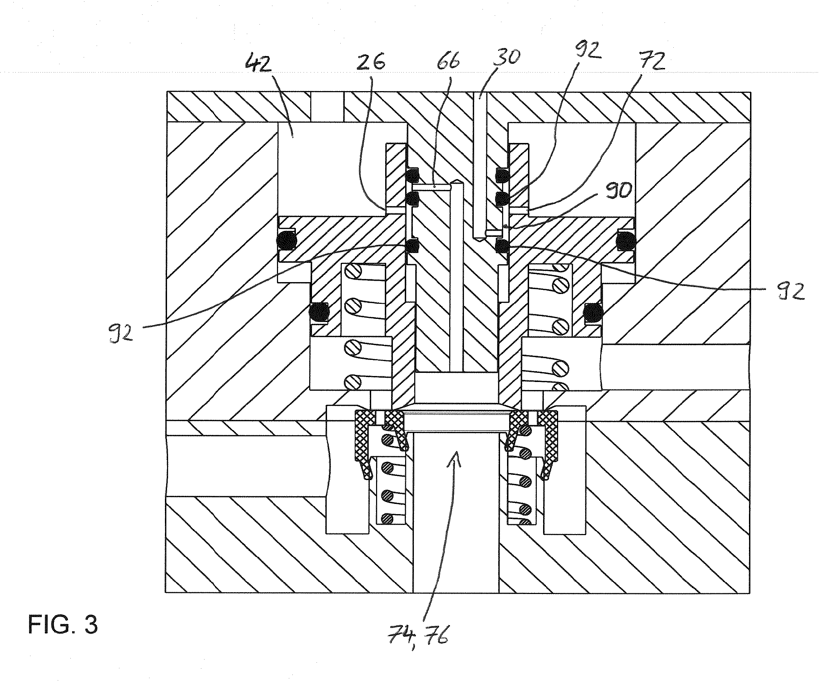

Unlike in the embodiment according to **Figs. 2A-2C****,** the two through openings 26, 72 of the relay piston 46 and the orifices of the supply channel 30 and the vent channel 66 and/or the radial ring chamber 90 cooperating with them are designed and arranged in such a way that in the embodiment of **Fig. 3****,** in the intermediate position shown there, although the mouth of the supply channel 30 is not aligned with the second passage opening 72, it has come in connection with the radial ring chamber 90 that is axially bounded by two annular seals 92. This radial ring chamber 90 is also in connection with the second passage opening 72. On the contrary, the mouth of the vent channel 66 with the first passage opening 26 are not in connection with each other. In this case, the second flow connection between the control chamber 42 and the supply port 16 is established, but not the first flow connection, so that the control chamber 42 is ventilated or pressurized. As a result, when the pressures prevailing in the control chamber 42 are (initially) between the supply pressure and the atmospheric pressure, there is a tendency for the control chamber 42 to be aerated. Further, in the intermediate position, both the inlet valve 74 and the outlet valve 76 are also closed in this case. Otherwise, as in the embodiment according to **Figs. 2A-2C****,** also in the embodiment of **Fig. 3** **the** first flow connection occurs (only) in the first (upper) end position and the second flow connection occurs (only) in the second (lower) end position of the relay piston 46.

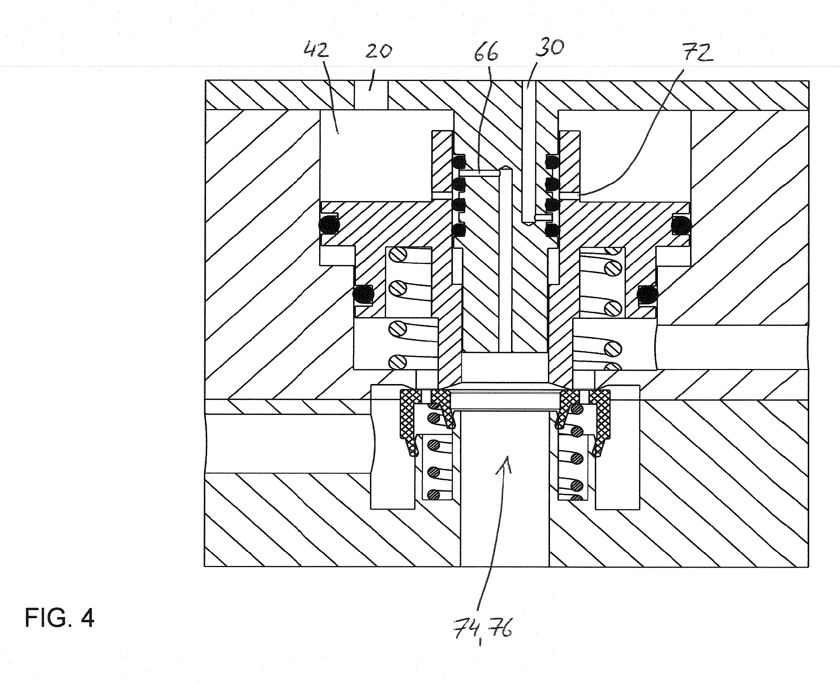

In the embodiment of **Fig. 4****,** the two through openings 26, 72 of the relay piston 46 and the orifices of the supply channel 30 and the vent channel 66 cooperating therewith are designed and arranged in such a way that, in the intermediate position also shown there, neither the orifice of the supply channel 30 is aligned with the second through opening 72 nor the orifice of the vent channel 66 with the first through opening 26. Therefore, neither the first nor the second flow communication occurs, so that the pressure in the control chamber 42, which is between the supply pressure and the atmospheric pressure, does not change. Further, again in the intermediate position, both the inlet valve 74 and the outlet valve 76 are closed. Otherwise, as in the embodiment according to **Figs. 2A-2C****,** in the embodiment of **Fig. 4** **the** first flow connection occurs (only) in the first (upper) end position and the second flow connection occurs (only) in the second (lower) end position of the relay piston 46.

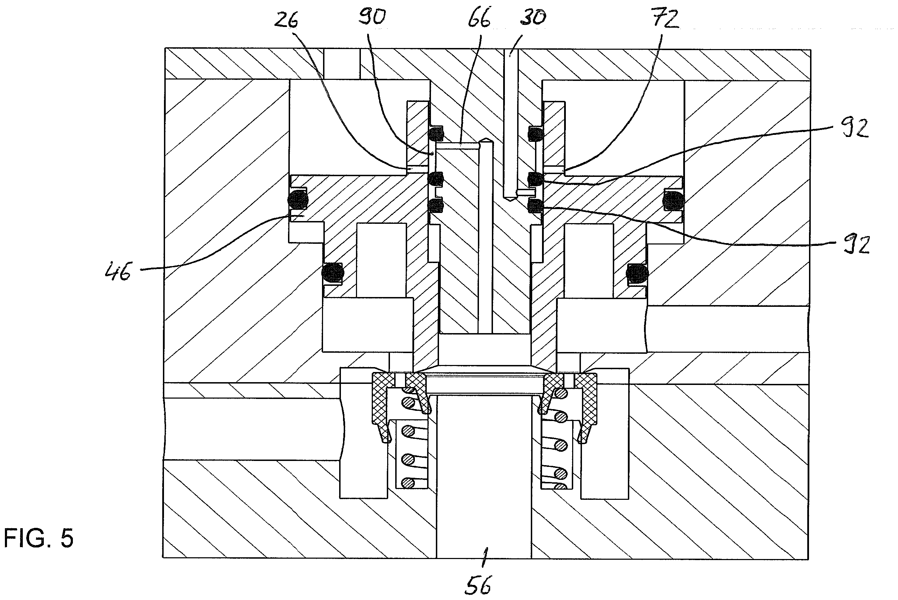

The embodiment of **Fig. 5** differs from the embodiment shown in **Figs. 2A-2C** **in that** no relay piston spring 64 is provided there. In this embodiment solution, therefore, the position of the relay piston 46 between the vented state of the control chamber 42 and the loading of the control chamber with an intermediate pressure between the reservoir pressure and the atmospheric pressure is not precisely defined. Therefore, the function must be the same in both cases. The position of the relay piston is therefore preferably the same in both cases. Therefore, in the embodiment of **Fig. 5**, the first flow connection between the control chamber 42 and the exhaust port 56 is established both in the first (upper) end position of the relay piston 46, in which the control chamber 42 is completely vented to atmospheric pressure, and at intermediate pressures between the reservoir pressure and the atmospheric pressure in the control chamber 42, so that the control chamber 42 is then connected to the exhaust port 56 via the first flow connection. On the other hand, the second flow connection is then disconnected or blocked. As a result, when the pressures in the control chamber 42 are between the reservoir pressure and the atmospheric pressure, as in the embodiment shown in **Figures 2A-2C****, there is** a tendency for the control chamber 42 to vent.

In the embodiment of **Fig. 5**, the second flow connection is again established (only) when the control chamber 42 is completely ventilated and the relay piston 46 has then assumed the second (lower) end position.

The switching states of the two 2/2-way solenoid valves 10, 12 are determined by the electronic controller 14, in particular as a function of the parking brake signals present at the parking brake signal port 32. For this purpose, the parking brake signal generator 36 is designed to trigger actuation-dependent parking brake signals which represent the operating states described further below.

The electronic controller 14 may also be connected via the parking brake signal port 32 or via another signal port to a vehicle data bus not shown in the figures, via which digital data may be received from and sent to other control devices. Instead of by, or in addition to, the parking brake signal generator 36 that can be manually operated by the driver, parking brake signals can also be input to the electronic controller 14 by another control device, for example via a vehicle data bus, for example by a driver assistance system such as a hill start assist system. Based on signals received via such a vehicle data bus, parking brake signals can then be generated by the electronic controller 14 itself. For example, the parking brake may be automatically applied when the vehicle has come to a stop, or may be automatically released when it is detected that the vehicle is to move off.

If, for example, according to **Fig. 6****,** a first pressure sensor 88 is connected to the output port 28 of the bistable relay valve 18 and is thus also connected to the port 40 for the at least one spring brake cylinder, the actual brake pressure and, from this, the operating state of the at least one spring brake cylinder (released, applied or partially released or applied) can be determined there. Furthermore, a pressure control loop can then be implemented in which the inlet/outlet solenoid valve combination 8 in conjunction with the bistable relay valve 18 form the actuators. However, if only the first pressure sensor 88 is used, the pressure controller will not detect pressure deviations until a deviation has already occurred at the output port 28 of the bistable relay valve 18. This can lead to increased compressed air consumption.

If a second pressure sensor 89 is connected to the control input 20 of the relay valve, the actual pressure applied by the first and second 2/2-way solenoid valves 10, 12 can be determined very quickly, resulting in a highly dynamic pressure control loop. In addition, the operating state of the at least one spring brake cylinder (released, applied or partially released or applied) as well as the actual brake pressure prevailing there can also be determined, but with a lower accuracy compared to the use of the first pressure sensor 88, since response behavior and hysteresis of the relay valve 18 enter as errors. A particular advantage of using the second pressure sensor 89 is that the pressure controller can regulate pressure deviations in the control chamber 42 so finely that they do not yet lead to a pressure deviation at the output port 28 of the bistable relay valve 18.

If, as is preferably the case here, a first pressure sensor 88 is connected to the output port 28 of the bistable relay valve 18 and a second pressure sensor 89 is connected to the control input 20 of the bistable relay valve 18, this also enables fault detection by means of a plausibility check. For example, the actual pressure values of the first and second pressure sensors 88, 89 must be in a certain relation to each other, taking into account certain tolerances, depending on the operating state. In this case, the error detection or error monitoring can be performed quickly, completely, and in multiple operating states. Furthermore, a faster pressure control with less compressed air consumption results than if only a first pressure sensor 88 is arranged at the operating output 28 of the relay valve 18 and a more precise pressure control of the operating output pressure results than if only a second pressure sensor 89 is arranged at the control input 20 of the relay valve 18.

As indicated in **Fig. 6****,** at least the following components of the brake control device 1 may be integrated in a brake control module having a common housing brake module housing 68: The electronic controller 14, the inlet/outlet solenoid valve combination 8, the bistable relay valve 18, and optionally the first pressure sensor 88 and the second pressure sensor 89.

With this in mind, the operation of the electromagnetic brake control device 1 is explained by way of example using the embodiment of the bistable relay valve 18 shown in **Figures 2A-2C** as follows:
If, in response to a parking brake signal generated by the parking brake signal generator 36 at the parking brake signal port 32 , the pressure at the port 40 for the at least one spring brake cylinder is to be reduced to achieve the "parking brake fully applied" operating state, the electronic controller 40 controls the first 2/2-way solenoid valve 10 to the de-energized state and the second 2/2-way solenoid valve 12 to the energized state to establish the condition shown in **Fig. 2A****,** the electronic control 40 controls the first 2/2-way solenoid valve 10 to the de-energized state and the second 2/2-way solenoid valve 12 to the energized state, such that the control chamber 42 is vented, particularly to atmospheric pressure. The relay piston 64 loading the relay piston 46 then ensures that it assumes its first (upper) end position where it remains, whereby the outlet valve 78 of the double-seat valve is permanently fully open. As a result, outlet port 28 is connected to the exhaust port 56. As a result, the pressure at output port 28 decreases and so does the pressure at the port for spring brake cylinder 40, causing the latter to be fully compressed.

If the pressure at the port 40 for the at least one spring brake cylinder is then to be increased in response to a parking brake signal generated by the parking brake signal generator 36 at the parking brake signal port 32, for example in order to establish the operating state "apply the parking brake with a specific brake pressure value" within the scope of an emergency or auxiliary brake function, the first 2/2-way solenoid valve 10 is switched to the through position by energizing it, thereby increasing the pressure in the control chamber 42 of the relay valve 18. This is done in particular by pulsing the first 2/2-way solenoid valve 10.

Then the relay piston 46 moves downward, opening the inlet valve 74 of the double-seat valve and allowing supply pressure to flow into the working chamber 58. The relay piston 46 then moves back to a neutral position in which the inlet seat 54 and outlet seat 50 of the double-seat valve are closed.

If, on the other hand, in the operating state "actuate parking brake with a specific brake pressure value", within the scope of the emergency or auxiliary brake function, a lower pressure is to be adjusted at the port 40 for the at least one spring brake cylinder in response to a corresponding parking brake signal, for example, the control pressure in the control chamber 42 is preferably lowered by pulsing the second 2/2-way solenoid valve 12.

Then the relay piston 46 moves toward the control chamber 42 and vents the working chamber 58 through the exhaust valve 78 of the double-seat valve until force equilibrium is restored, whereupon the relay piston 46 returns to the neutral or intermediate position (**Fig. 2B**), in which both the inlet valve 74 and the exhaust valve 78 are closed.

To establish the operating state "driving", i.e. "parking brake completely released" in response to a corresponding parking brake signal generated by the parking brake signal generator 36 at the parking brake signal port 32, the first 2/2-way solenoid valve 10 is energized, for example, for a longer period of time. This causes the control chamber 42 to be vented. As a result, the pressure in the working chamber 58 increases faster than in the control chamber 42 until it finally exceeds it.

This forces the relay piston 46 stably into its lower second end position (**Fig. 2C**) facing the working chamber 58, so that it permanently opens the inlet valve 74 of the double-seat valve and connects the working chamber 58 to the supply port 16 and thus to the compressed air supply via the device supply port 2.

Use of the bistable relay valve 18 is not restricted to the electropneumatic brake control device 1, which is preferably designed here as a parking brake device. It is also conceivable to use the bistable relay valve 18 in a service brake control device which controls or regulates the service brake pressure of a service brake device , or in a trailer brake control device which controls or regulates the trailer brake pressure of a trailer brake device.

It should also be mentioned that combining the electropneumatic brake control device 1 with another electronically controlled vehicle system to form a structural unit can be advantageous, since a common, electronic control system can be provided. In particular, combining with an air treatment system offers advantages, since the supply line to the electropneumatic brake control device can also be omitted here.

The combination of features of different embodiments of the invention is possible and is hereby encouraged.

### List of reference signs

- 1: brake control device
- 2: device supply port
- 4: check valve
- 6: supply line
- 8: inlet/outlet solenoid valve combination
- 10: first 2/2-way solenoid valve (inlet solenoid valve)
- 12: second 2/2-way solenoid valve (outlet solenoid valve)
- 14: electronic controller
- 16: supply port
- 18: relay valve
- 20: control input
- 22: control line
- 24: atmosphere
- 26: first passage opening
- 28: output port
- 30: supply channel
- 32: parking brake signal port
- 36: parking brake signal transmitter
- 40: port for spring brake cylinder
- 42: control chamber
- 44: relay valve housing
- 46: relay piston
- 48: valve body
- 50: outlet seat
- 52: cuff
- 54: inlet seat
- 56: exhaust port
- 58: working chamber
- 60: supply chamber
- 62: cuff spring
- 64: relay piston spring
- 65: piston wall
- 66: internal vent duct
- 68: brake module housing
- 70: axial direction of movement
- 72: second passage opening
- 74: inlet valve
- 78: exhaust valve
- 80: first effective surface
- 82: second effective surface
- 88: first pressure sensor
- 89: second pressure sensor
- 90: radial ring chamber
- 92: annular seals
- 93: cylindrical protrusion
- 94: cover
- 95: valve block

## Claims

1. Bistable relay valve (18) for an electropneumatic brake control device (1), with
a) a relay valve housing (44),
b) a relay piston (46) guided within the relay valve housing (44) and capable of assuming a first end position, a second end position, and a plurality of intermediate positions between the first end position and the second end position,
c) a control chamber (42), which is delimited by the relay piston (46),
d) a pneumatic control input (20), always connected to the control chamber (42), for feeding control pressure from a control pressure generator (8) into the control chamber (20) for actuating the relay piston (46),
e) an output port (28) for controlling a working pressure,
f) at least one supply port (16), which is designed and set up to control a supply pressure of at least one compressed air supply there,
g) an exhaust port (56) that is always in communication with the atmosphere (24),
h) a double-seat valve comprising an inlet valve (74) and an outlet valve (78) and actuated by the relay piston (46), and with
i) a working chamber (58) connected to the output port (28),
j) a supply chamber (60) connected to the at least one supply port (16), wherein
k1) in the first end position of the relay piston (46), the working chamber (58) is brought into communication or is in communication with the exhaust port (56), and
k2) in the second end position of the relay piston (46), the working chamber (58) is brought into communication or is in communication with the supply chamber (60), wherein
l) when the relay piston (46) has reached the first end position, a first flow connection is established, in which the control chamber (42) is or becomes connected to the exhaust port (56), the first flow connection being disconnected at least in the second end position of the relay piston (46), **characterized in that**
m) when the relay piston (46) has reached the second end position, a second flow connection is established in which the at least one supply port (16) is or becomes connected to the control chamber (42), wherein
n) the second flow connection is disconnected at least in the first end position.

2. The bistable relay valve of claim 1, **characterized in that** in at least one particular intermediate position of the plurality of intermediate positions of the relay piston (46), the inlet valve (74) and the outlet valve (78) are closed, wherein in the at least one particular intermediate position
a) the first flow connection is established and the second flow connection is disconnected, or
b) the second flow connection is established and the first flow connection is disconnected, or
c) both the first flow connection and the second flow connection are separated.

3. Bistable relay valve according to one of the preceding claims, **characterized in that** the relay piston (46) delimits the control chamber (42) on the one hand and the working chamber (58) on the other hand.

4. Bistable relay valve according to one of the preceding claims, **characterized in that** the relay piston (46) has a first effective surface (80) and a second effective surface (82) facing away from the first effective surface (80), the first effective surface (80) facing the control chamber (42) and being larger than the second effective surface (82), which faces the operating chamber (58).

5. Bistable relay valve according to one of the preceding claims, **characterized in that** the relay piston (46) is biased into the first end position by first spring means (64).

6. Bistable relay valve according to one of the preceding claims, **characterized in that** the relay piston (46) and the relay valve housing (44) form components of a slide valve, which is constructed and arranged to establish and/or disconnect the first flow connection and the second flow connection depending on the position of the relay piston (46).

7. Bistable relay valve according to claim 6, **characterized in that** the relay piston (46) is at least
a) a first passage opening (26) which, on the one hand, is always in communication with the control chamber (42) and which, in the first end position, comes in connection with an internal vent channel (66) connected to the exhaust port (56), and/or
b) a second passage opening (72) which, on the one hand, is always in communication with the control chamber (42) and which, in the second end position, comes in connection with a supply channel (30) which is connected to the at least one supply port (16).

8. Bistable relay valve according to any one of the preceding claims, **characterized in that**
a) the inlet valve (74) of the double-seat valve has an inlet seat (54) formed on the relay valve housing (44) and a sleeve (52) cooperating therewith and guided in the relay valve housing (44), which sleeve is biased against the inlet seat (54) by second spring means (62), and that
b) the outlet valve (78) of the double-seat valve has an outlet seat (50) formed on the sleeve (52) and a valve body (48) of the relay piston (46) cooperating therewith.

9. Electropneumatic brake control device (1), **characterized in that** it comprises at least one bistable relay valve (18) according to one of the preceding claims, the control pressure generator (8) and at least one brake cylinder, the pneumatic control input (20) being connected to the control pressure generator (8) and the at least one brake cylinder being connected directly or indirectly to the output port (28).

10. Electropneumatic brake control device, according to claim 9, **characterized in that** it comprises:
a) a parking brake control device, wherein the working pressure is a parking brake pressure and the at least one brake cylinder is a spring brake cylinder, or
b) a service brake control device, wherein the working pressure is a service brake pressure and the at least one brake cylinder is a service brake cylinder, or
c) a trailer brake control device, wherein the working pressure is a trailer brake pressure.

11. Electropneumatic brake control device, according to claim 9 or 10, **characterized in that** the control pressure generator (8) comprises an inlet/outlet solenoid valve combination controlled by an electronic controller (14) to generate the control pressure.

12. Electropneumatic brake control device according to claim 11, **characterized in that** it is designed as a brake control module in which at least the following is integrated:
a) at least one integrated bistable relay valve (18) according to any one of claims 1 to 7,
b) the electronic controller (14), and
c) the inlet/outlet solenoid valve combination (8).

13. Electropneumatic brake control device according to claim 12, **characterized in that** the brake control module further comprises at least one integrated pressure sensor (88, 89), and the electronic controller (14) is set up and designed to regulate the working pressure measured by at least one pressure sensor (88, 89) and output at the output port (28) of the bistable relay valve (18) and/or the control pressure input into the control input (20) of the bistable relay valve (18) to a set pressure.

14. Brake device of a vehicle, **characterized in that** it comprises an electropneumatic brake control device (1) according to any one of claims 9 to 13 and the at least one compressed air supply, the at least one supply port (16) being connected to the at least one compressed air supply.

15. Brake device according to claim 14, **characterized in that** it comprises
a) a parking brake device, and/or
b) a service brake device, and/or
c) is or includes a trailer braking device.
